# FASCICULE DE BREVET EUROPEEN

(11) **EP 1 864 861 B1**
(45) Date de publication et mention de la délivrance du brevet: **08.08.2012**
(21) Numéro de dépôt: 07109851.1
(22) Date de dépôt: 08.06.2007
(51) Int. Cl.: B60R 5/04

(54) **Système de cache-bagages à éléments de solidarisation ajustables, élément de solidarisation, procédé de montage et véhicule correspondants.**
Gepäckabdecksystem mit regulierbaren Verbindungselementen, Verbindungselement, Montageverfahren und entsprechendes Fahrzeug
Baggage concealing system with adjustable attachment elements, attachment element, corresponding assembly method and vehicle.

(30) Priorité: 08.06.2006 FR 0605095
(43) Date de publication de la demande: 12.12.2007
(73) Titulaire: Advanced Comfort Systems France SAS - ACS France, 79300 Bressuire (FR)
(72) Inventeur: Fourel, Pascal, 35400, SAINT-MALO (FR)
(74) Mandataire: Bioret, Ludovic

(56) Documents cités:
- EP-A1- 0 234 497
- EP-A2- 0 890 478
- WO-A-98/01321
- US-A- 4 220 367
- US-A- 5 813 449

## Description

### 1. Domaine de l'invention

Le domaine de l'invention est celui des équipements pour véhicules automobiles. Plus précisément, l'invention concerne les cache-bagages, et en particulier les cache-bagages amovibles.

### 2. Art antérieur

On connaît de nombreuses solutions de systèmes de cache-bagages pour les véhicules automobiles. Ils sont souvent constitués de toiles d'occultation qui sont montées sur un tube enrouleur placé dans une cassette.

Dans certains cas, cette cassette peut être amovible. Ces cassettes peuvent ainsi être stockées dans le véhicule (ou à l'extérieur de celui-ci) quand elles ne sont pas utilisées.

Cette cassette est le plus souvent montée au fond du coffre, à proximité du dossier de la banquette arrière du véhicule. Généralement, elle présente, à chacune de ses extrémités, des moyens de solidarisation aux parois latérales du coffre.

Cette cassette mesure sensiblement la largeur intérieure du coffre. Cependant, il existe une grande dispersion dans la largeur intérieure des coffres des véhicules pour un modèle donné. On peut ainsi observer des variations de cette dimension pouvant atteindre plusieurs millimètres. De même, la longueur des cassettes peut varier légèrement pour un même modèle. Aussi, on constate un jeu souvent important entre les extrémités de la cassette et l'habillage intérieur des parois latérales du coffre qui peut compromettre la solidarisation de la cassette au véhicule.

Afin d'obvier cet inconvénient, diverses approches ont été envisagées de façon à compenser ces jeux.

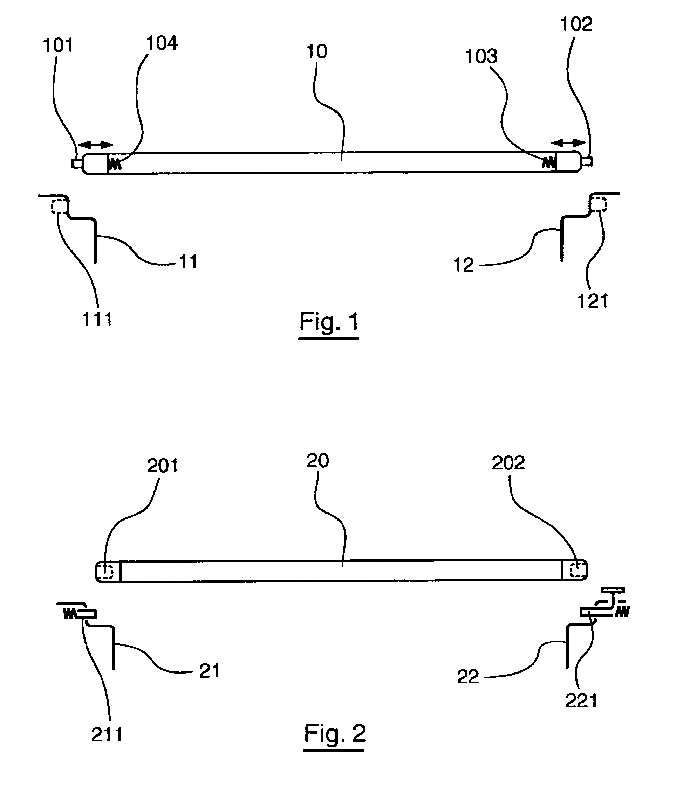

Selon une première approche de l'art antérieur, illustrée à la figure 1, une cassette 10 présente à chacune de ses extrémités des moyens de solidarisation formant pistons 101, 102 destinés à coopérer avec des logements 111, 121 prévus à cet effet dans l'habillage des parois latérales 11, 12 d'un coffre.

Les pistons 101, 102 peuvent coulisser à l'intérieur de la cassette 10, et sont maintenus dans une position déployée sous l'effet de deux moyens de rappel 103, 104. Ces pistons, qui peuvent plus généralement être des moyens mobiles selon l'axe défini par la cassette, forment des moyens de réglage, permettant de modifier légèrement la longueur de la cassette, et donc de l'adapter à la largeur entre les parois du coffre, indépendamment du jeu existant sur l'écart entre les parois.

Selon une seconde approche de l'art antérieur, illustrée à la figure 2, des éléments de réglage, par exemple sous la forme de pistons 211, 221, sont placés au niveau des parois 21, 22 du coffre. Ainsi, ces pistons 211, 221 coopèrent avec les extrémités de la cassette 20, pour s'adapter à la longueur de celle-ci.

< Une telle technique est décrite dans la demande de brevet européen portant le numéro EP-A2- 0 890 478. >

La mise en oeuvre de tels moyens de compensation permet donc de faire varier la distance séparant les extrémités de chaque piston entre une valeur minimale « I » et une valeur maximale « L » et ainsi de compenser en partie les jeux observés entre la cassette les parois latérales de l'habillage dus aux variations de largeur de coffre et de longueur de cassette et de permettre sa solidarisation.

Un inconvénient de ces techniques de l'art antérieur est qu'elles sont relativement complexes à mettre en oeuvre, et donc coûteuse. Notamment, équiper une cassette de pistons augmente clairement sa complexité, et donc son coût. De la même façon, équiper les parois d'un véhicule de pistons de réglage augmente le coût de ce dernier.

Ces pistons sont cependant considérés nécessaires, du fait de l'existence possibles de jeux entre les extrémités de la cassette et les parois latérales de l'habillage du coffre qui peuvent amener la cassette à se déplacer, et engendrer des vibrations provoquer des dégradations du cache-bagages.

Ces vibrations peuvent également occasionner des nuisances sonores pour les occupants d'un véhicule.

Encore un inconvénient de ces techniques de l'art antérieur est que les pistons mis en oeuvre pour solidariser la cassette introduisent une fragilité, du fait notamment qu'ils peuvent être soumis fréquemment à des chocs lors de la mise en place ou du démontage de la cassette entraînant leur déterioration.

### 3. Objectifs de l'invention

L'invention a notamment pour objectif de pallier ces inconvénients de l'art antérieur.

Plus précisément, un objectif de l'invention est de fournir une technique qui permette de solidariser simplement et efficacement une cassette d'un cache-bagages dans le coffre d'un véhicule.

Un autre objectif de l'invention est de fournir une telle technique qui permette de compenser les jeux pouvant exister entre les extrémités d'une cassette de cache-bagages et les parois latérales de l'habillage d'un coffre auxquelles elle est solidarisée, due aux variations de larguer de coffre et de longueur de cassette observées d'un véhicule à l'autre pour un modèle donné.

L'invention a encore pour objectif de procurer une telle technique qui permette de préserver les qualités esthétiques de l'habitacle d'un véhicule.

Encore un autre objectif de l'invention est de fournir une telle technique qui soit simple à mettre en oeuvre, fiable et peu coûteuse, et qui simplifie la cassette.

### 4. Exposé de l'invention

Ces objectifs, ainsi que d'autres qui apparaîtront par la suite, sont atteints à l'aide d'un système de cache-bagages pour véhicule automobile, comprenant une cassette amovible, à l'intérieur de laquelle est logé au moins un rideau d'occultation mobile entre une position repliée et au moins une position dépliée, et deux éléments de solidarisation comprenant chacun un bâti destiné à être monté sur une paroi du coffre dudit véhicule et comprenant une cavité formant un réceptacle coopérant chacun avec une des extrémités de ladite cassette.

Selon l'invention, au moins un desdits éléments de solidarisation et/ou au moins une desdites parois comprend des moyens d'adaptation de la position relative de chacun desdits bâtis, au moins selon un axe de réglage parallèle à un axe défini par ladite cassette lorsqu'elle est montée dans lesdits éléments de solidarisation, de façon à compenser un jeu éventuel sur la distance entre lesdites parois et/ou sur la longueur de ladite cassette.

Ainsi, l'invention repose sur une approche tout à fait nouvelle et inventive de la solidarisation d'une cassette de cache-bagages aux moyens de deux éléments de solidarisation destinés à être montés chacun sur une paroi d'un coffre de véhicule et à coopérer chacun avec une extrémité de la cassette.

Plus précisément, la position des éléments de solidarisation sur la paroi du coffre peut être adaptée, ou réglée, selon un axe parallèle à un axe défini par la cassette lorsqu'elle est montée dans les éléments de solidarisation. Les éléments de solidarisation peuvent ainsi être rapprochés ou éloignés l'un de l'autre, en fonction des besoins spécifiques au véhicule concerné. La distance séparant les deux éléments de solidarisation peut donc être augmentée ou diminuée et ainsi ajustée à la longueur de la cassette de façon à compenser un jeu éventuel entre les parois du coffre et les extrémités de la cassette.

Dans un mode de réalisation préférentiel, le ou les éléments de solidarisation présentent une première portion destinée à coopérer avec un logement formé dans une paroi latérale dudit coffre.

Les éléments de solidarisation selon l'invention peuvent ainsi être facilement solidarisés dans le coffre d'un véhicule.

Avantageusement, la première portion présente au moins un premier moyen de guidage coopérant avec au moins un second moyen de guidage complémentaire prévu à cet effet dans ledit logement formé sur la paroi latérale correspondante dudit coffre, pour faciliter un déplacement relatif selon ledit axe de réglage.

La position des éléments de solidarisation peut donc être ajustée de façon simple et efficace de façon à compenser les variations de largueur de coffre observées d'un véhicule à l'autre pour un modèle donné.

Préférentiellement, au moins un des éléments de solidarisation est fixé à la paroi à l'aide d'au moins une agrafe.

De façon avantageuse, le ou les éléments de solidarisation comprennent au moins une lèvre déformable venant en appui sur ladite paroi latérale.

Les éléments de solidarisation peuvent ainsi être déplacés par rapport à la paroi latéral tout en conservant un assemblage jointif des éléments de solidarisation aux parois latérales.

De façon préférentielle, au moins un desdits éléments de solidarisation comprend des moyens d'ajustement d'une longueur de pénétration de la cassette à l'intérieur d'un réceptacle formé dans le ou les éléments de solidarisation.

Avantageusement, les moyens d'ajustement comprennent une lame formant moyens de rappel et/ou mobile sous l'action de moyens de rappel.

La cassette peut ainsi être centrée et calée entre deux éléments de solidarisation de façon à éviter que la cassette se déplace ou vibre.

De façon préférentielle, un des éléments de solidarisation comprend un couvercle mobile entre une position de maintien, empêchant le retrait de la cassette et une position de libération permettant le retrait de la cassette.

La cassette peut ainsi être efficacement solidarisée à l'intérieur du coffre d'un véhicule.

Avantageusement, dans la position de retrait, le couvercle agit sur la lame et/ou sur les moyens de rappel de façon à faciliter le retrait de la cassette.

Préférentiellement, le couvercle est guidé en coulissement dans l'élément de solidarisation, selon un axe sensiblement parallèle à l'axe de réglage.

L'invention concerne également un élément de solidarisation selon l'invention, un procédé d'assemblage d'un système cache-bagages et un véhicule équipé d'un tel système cache bagages.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 illustre une première approche de l'art antérieur permettant de fixer une cassette de cache-bagages et de compenser les jeux ;
- la figure 2 illustre une seconde approche de fixation d'une cassette de cache-bagages et de compensation des jeux de l'art antérieur ;
- les figure 3a et 3b illustrent le principe général de la fixation d'une cassette d'un système de cache-bagages au moyen d'élément de solidarisation selon l'invention. ;
- les figures 4a et 4b illustrent un élément de solidarisation du système des figures 3a et 3b ;
- la figure 5 illustre la fixation d'un élément de solidarisation selon l'invention à une paroi d'un coffre de véhicule, et la mise en place d'une cassette de cache-bagages dans le coffre d'une véhicule ;
- la figure 6 est une vue partielle d'une cassette d'un cache-bagages mise en place dans un coffre de véhicule au moyen d'éléments de solidarisation selon l'invention ;
- la figure 7 illustre la désolidarisation d'une cassette de cache-bagages maintenu dans un coffre de véhicule au moyen d'éléments de solidarisation selon l'invention ;
- la figure 8 est un synoptique d'un procédé d'assemblage d'un élément de solidarisation d'une cassette d'un système de cache-bagages selon l'invention.

### 6. Description d'un mode de réalisation de l'invention

### 6.1 Principe de l'invention

Le principe général de l'invention repose donc sur la solidarisation d'une cassette de cache-bagages aux moyens de deux éléments de solidarisation destinés à être montés chacun sur une paroi d'un coffre de véhicule et à coopérer chacun avec une extrémité de la cassette.

Selon l'invention, la position des éléments de solidarisation sur la paroi du coffre peut être adaptée, ou réglée, selon un axe parallèle à un axe défini par la cassette lorsqu'elle est montée dans les éléments de solidarisation. Les éléments de solidarisation peuvent ainsi être rapprochés ou éloignés l'un de l'autre, en fonction des besoins spécifiques au véhicule concerné. La distance séparant les deux éléments de solidarisation peut donc être augmentée ou diminuée et ainsi ajustée à la longueur de la cassette de façon à compenser un jeu éventuel entre les parois du coffre et les extrémités de la cassette.

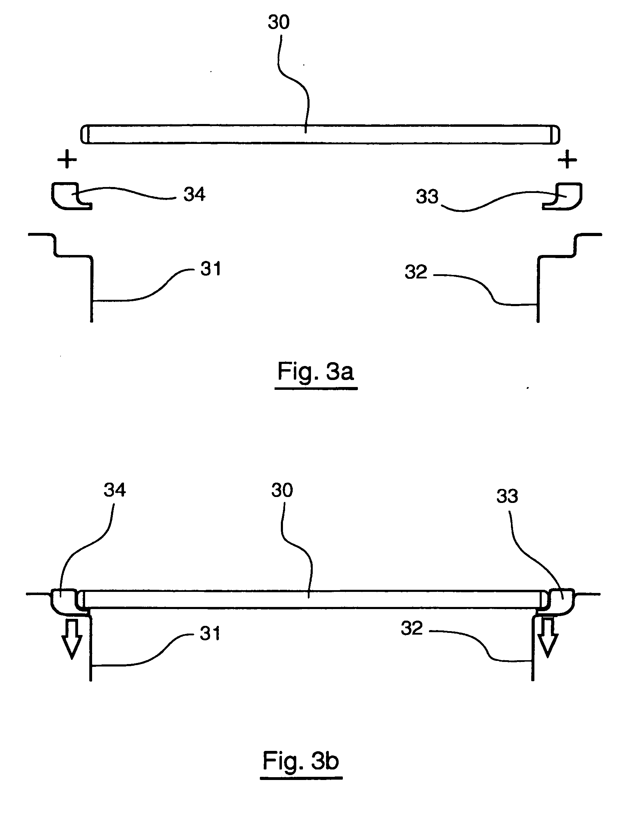

On présente, en relation avec les figures 3a et 3b, le principe général de l'invention.

Une cassette 30 est fixée à chacune de ses extrémités aux parois latérales 31, 32 d'un coffre au moyen de deux éléments de solidarisation 33 et 34 (les éléments de solidarisation 33, 34 seront décrits plus loin). De façon habituelle, la cassette 30 est fixée à proximité du haut de la banquette arrière du véhicule. Bien sûr, d'autres emplacement peuvent être envisagées.

Cette cassette 30 contient classiquement un tube enrouleur sur lequel est montée une toile d'occultation (non représentés sur les figures). Une barre de tirage (non représentée), fixée à la toile, permet de la faire passer d'une position repliée à au moins une positon déployée dans laquelle elle recouvre ou moins partiellement l'espace formé par le coffre. Dans une variante de ce mode de réalisation, la cassette 30 peut contenir plusieurs tubes enrouleurs et/ou plusieurs toiles d'occultation.

Tel que cela apparaît clairement sur la figure 3a, les éléments de solidarisation 33 et 34 sont indépendants de la cassette 30 et sont destinés à être solidarisés aux parois latérales 31 et 32 du coffre.

### 6.2 Description d'un élément de solidarisation

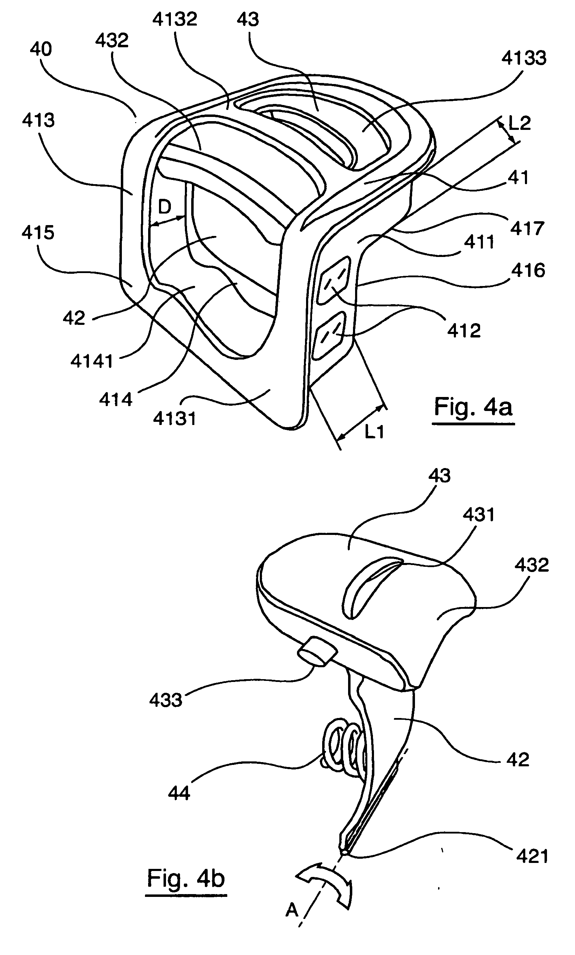

Les figures 4a et 4b illustrent un élément de solidarisation selon l'invention.

Un élément de solidarisation 40 comprend un bâti 41. Ce bâti 41 peut par exemple être réalisé dans un matériau plastique et peut être obtenu par un procédé par injection. D'autres matériaux et d'autres modes de fabrication du bâti 41 peuvent bien sûr être envisagés.

Le bâti 41 présente une forme générale sensiblement en « L ». Il comporte une portion intérieure 411 prévue pour coopérer avec un logement de forme complémentaire prévu dans une paroi latérale d'un coffre. La portion intérieure 411 porte des moyens de solidarisation 412 permettant de fixer l'élément de solidarisation 40 à une paroi latérale d'un coffre. Ces moyens de solidarisation 412 prennent ici la forme d'agrafes. Tout autre moyen de solidarisation peut être envisagé. On pourra, par exemple, fixer un élément de solidarisation selon l'invention par clippage, vissage, collage...

Le bâti 41 présente également une portion extérieure 413. Cette portion extérieure 413 est visible depuis l'intérieur du véhicule lorsque l'élément de solidarisation y est fixé.

La portion extérieure 413 se compose d'une face sensiblement verticale 4131 et d'une face sensiblement horizontale 4132. Une lumière s'étant depuis la face verticale 4131 jusque sur une portion de la face horizontale 4132 et définit une cavité 414 à l'intérieur du bâti 41.

La cavité 414 forme un réceptacle à l'intérieur duquel une extrémité d'une cassette de cache-bagages vient s'inscrire lors de sa solidarisation à l'intérieur du coffre d'un véhicule. La face horizontale 4132 présente également une ouverture 4133 s'ouvrant sur une manette 43. Les bords de cette cavité peuvent être adaptés pour faciliter le centrage de la cassette, par exemple à l'aide d'une déformation de guidage 4141.

Une lèvre déformable 415 s'étend tout le long de la portion extérieure 413 du bâti 41. Comme il sera décrit plus loin, cette lèvre est destinée à venir en appui contre une paroi latérale du coffre. La déformation de la lèvre déformable 415 peut permettre de faire varier :
- la longueur L1 séparant le contour de la face verticale 4131 et la face arrière verticale 416 ;
- la longueur L2 séparant le contour de la face horizontale 4132 et la face arrière horizontale 417.

Une lame 42, logée sensiblement au fond de la cavité 414, peut être fixée au bâti 41. Cette lame 42 présente une surface sensiblement incurvée. Elle comporte, dans sa partie inférieure, un alésage 421. L'alésage 421 permet de fixer la lame 42 au bâti 41 au moyen d'une tige (non représentée) de façon que la lame 42 est mobile en rotation autour d'un axe noté « A » par rapport au bâti 41. Le déplacement de la lame 42 permet ainsi de faire varier la distance notée « D » séparant la face extérieure de la lame 42 et la face verticale 4131 du bâti 41. Un ressort de compression 44 agit sur la lame 42. Des moyens de rappel autres que les ressorts de compression peuvent remplacer le ressort 44. Ainsi, la lame 42 peut être une lamelle élastique.

Cette lame vient en appui contre l'extrémité de la cassette, de façon à lutter contre les vibrations et le bruit. D'autres moyens pour assurer cette fonction peuvent être envisagés, mettant en oeuvre des moyens mobiles et des moyens de rappel.

La lame 42 est liée, dans sa partie supérieure, à un organe d'actionnement, ici représenté sous la forme d'une manette 43.

La manette 43 est prévue pour coulisser à l'intérieur du bâti 41. À cet effet, elle comporte sur ses faces latérales, des éléments de guidages 433 prévus pour coopérer avec des logements de forme complémentaire prévus dans le bâti 41. La manette 43 permet d'agir contre de l'effort exercé par le ressort de compression 44 sur la lame 42 et de la faire pivoter autour de l'axe « A ». La manette 43 présente sur sa partie supérieure un enfoncement 431 destiné à faciliter son déplacement par voie manuelle. La mannette 43 présente également dans sa partie antérieure, un couvercle 432. Le couvercle 432 est mobile entre deux positions :
- une position de maintien dans laquelle il recouvre au moins partiellement la partie supérieure de la cavité 414 de façon à empêcher le retrait de la cassette ;
- une position de libération dans laquelle il ne recouvre pas la partie supérieure de la cavité 414 de façon à permettre le retrait ou la mise en place de la cassette.

### 6.3 Fixation des éléments de solidarisation

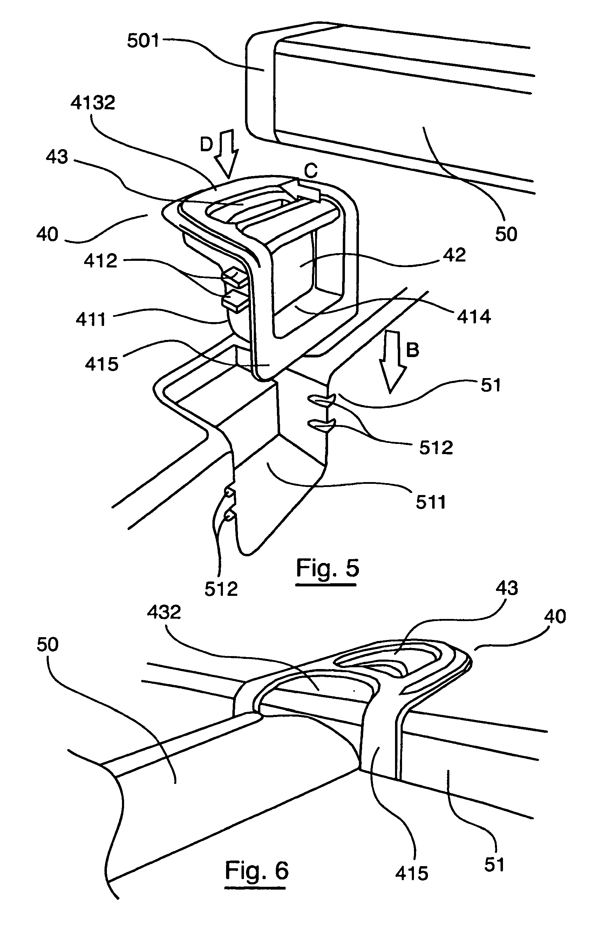

On précise, en relation avec la figure 5, un mode de montage et de fixation des éléments de solidarisation selon l'invention aux parois d'un coffre de véhicule. Seule une extrémité d'une cassette et un élément de solidarisation sont représentés sur cette figure 5. Bien entendu, chaque extrémité d'une cassette peut être solidarisée à une paroi d'un coffre de véhicule au moyen d'un élément de solidarisation selon l'invention. Selon une approche, il est possible qu'un seul élément soit réglable.

La fixation des éléments de solidarisation 40 aux parois 51 d'un coffre d'un véhicule se fait en plusieurs étapes.

Dans une première étape, chaque extrémité de la cassette 50 est insérée dans la cavité 414 d'un élément de solidarisation 40 jusqu'à venir en contact avec la lame 42. On obtient alors un système de cache-bagages composé d'une cassette 50 dont chaque extrémité est emboîtée dans un élément de solidarisation 40.

Dans une seconde étape, la portion intérieure 411 de chaque élément de solidarisation 40 est insérée suivant la flèche B dans un logement 511 de forme complémentaire prévu dans les parois 51 d'un coffre de véhicule.

Le système de cache-bagages peut alors être centré entre les parois 51 du coffre. Au cours de ce centrage, chaque élément de solidarisation 40 coopère avec des zones de guidage 512 formés dans les logements 511 des parois 51 et est déplacé suivant la flèche C (dans l'une ou l'autre des directions). Lors du déplacement du système cache-bagages, la lèvre déformable 415 de chacun des éléments de solidarisation se déforme et vient en appui contre une des parois 51 du coffre.

Plus la distance séparant les parois 51 du coffre sera importante, moins les lèvres déformables 415 se déformeront. Inversement, plus la distance séparant les parois 51 du coffre sera faible, plus les lèvres déformables 415 se déformeront. La déformation des lèvres 415 permet donc de compenser les variations de distance entre les parois d'un coffre pour un véhicule donné.

Dans une troisième étape, les agrafes 412 sont enfichées dans les orifices 512. Chaque élément de solidarisation 40 est alors solidement fixé à la paroi 51 du coffre.

Une fois les éléments de solidarisation fixés, la distance séparant la lame de chaque élément de solidarisation 40 est sensiblement égale à la distance séparant les extrémités de la cassette 50, et la lèvre déformable 415 de chaque élément de solidarisation 40 est en appui contre une paroi 51 du coffre. Aucun «jour» n'est donc visible entre les éléments de solidarisation et les parois du coffre. Ceci participe à la préservation des qualités esthétiques de l'intérieur du véhicule.

### 6.4 Démontage d'une cassette

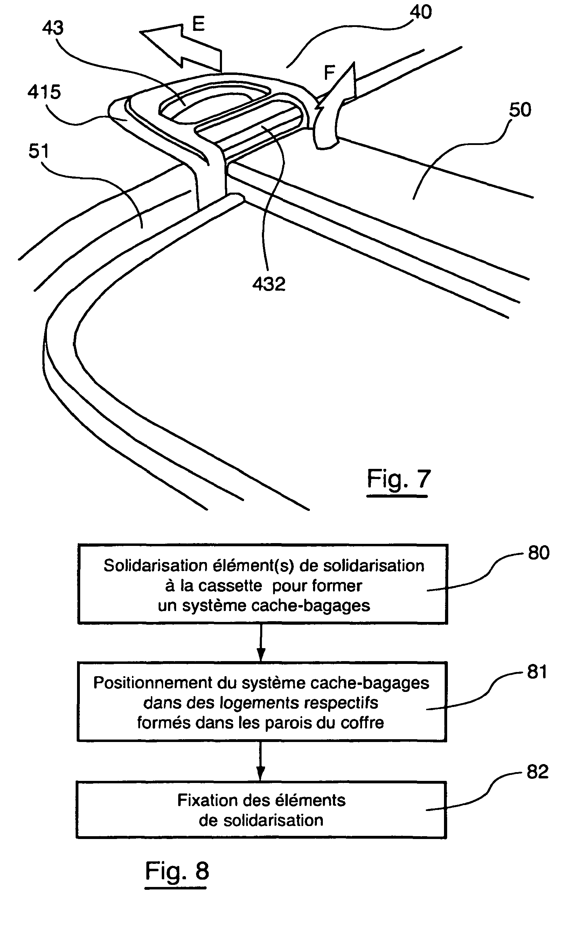

On illustre, en relation avec la figure 7, le démontage d'une cassette d'un store fixé à l'intérieur d'un coffre d'un véhicule au moyen d'éléments de solidarisation selon l'invention.

Afin de démonter la cassette 50, la manette 43 est déplacée suivant la flèche E de façon à faire passer le couvercle 432 de sa position de maintien à sa position de libération et à libérer la partie supérieure de la cavité 414. La cassette 50 est alors déverrouillée. Chaque extrémité de la cassette 50 peut alors être dégagée de la cavité 414 en la déplaçant suivant la flèche F, et la cassette peut être dissociée du véhicule.

### 6.5 Mise en place d'une cassette

On illustre en relation avec la figure 5, la mise en place d'une cassette de cache-bagages dans un coffre de véhicule au moyen d'éléments de solidarisation selon l'invention.

La solidarisation de la cassette 50 se fait en introduisant chacune de ses extrémités dans la cavité 414 d'un élément de solidarisation 40. Pour cela, la manette 43 est déplacée selon la flèche C de façon à ce que le couvercle 432 passe de sa position de maintien à sa position de libération dans laquelle il libère l'accès à la cavité 414 par la face horizontale 4132 de l'élément de solidarisation. Chaque extrémité de la cassette 50 peut alors être facilement insérée dans la cavité 414.

Après que chaque extrémité de la cassette est insérée dans une cavité 414, chaque manette 43 est relâchée. Les lames 42 viennent alors en appui sur chaque extrémité de la cassette 50. Le déplacement des lames 42 permet d'ajuster la distance de pénétration des extrémités de la cassette dans les cavités 414 et de centrer la cassette 50 entre les deux éléments de solidarisation. La variation de la distance de pénétration des extrémités de la cassette dans les cavités 414 permet de centrer et de caler la cassette entre les deux éléments de solidarisation. Dans le même temps, chaque couvercle 432 passe dans sa position de maintien dans laquelle il vient recouvrir une partie des extrémités de la cassette 50, empêchant le retrait de celle-ci. La cassette est alors verrouillée.

Le recouvrement des extrémités de la cassette permet non seulement de verrouiller la cassette dans les éléments de solidarisation 40, mais aussi de ne pas laisser apparaître de jour entre les extrémités de la cassette est les éléments de solidarisation, et donc de préserver les qualités esthétiques de l'intérieur du véhicule.

On note que dans une variante de ce mode de réalisation, chaque extrémité de la cassette 50 peut être recouverte d'un embout 501, réalisé par exemple en matière plastique. Ces embouts 501 permettent de limiter l'usure des éléments de solidarisation selon l'invention et de la cassette.

La figure 6 illustre une extrémité de la cassette 50 fixée à une paroi d'un coffre de véhicule au moyen d'un élément de solidarisation 40. Il apparaît clairement sur cette figure, que le recouvrement de l'extrémité de la cassette 50 par la portion de recouvrement 432 permet d'obtenir un assemblage parfaitement « jointif » de la cassette et de ne laisser aucun jeu visible entre les extrémités de la cassette et les parois 51 du coffre. Il apparaît également que l'assemblage de l'élément de solidarisation 40 à la paroi 51 du coffre est, de part la mise en oeuvre de la lèvre 515 venant se plaquer contre la paroi 51, parfaitement jointif.

La mise en oeuvre de lèvre déformable solidaire de chaque élément de solidarisation et venant en appui contre les parois d'un coffre permet d'ajuster la distance séparant les éléments de solidarisation tout en assurant que leur assemblage soit jointif, et de compenser les variations de largueur de coffre observées d'un véhicule à l'autre pour un modèle donné.

La mise en oeuvre d'une lame mobile, solidaire de chaque élément de solidarisation, contre laquelle vient en appui une extrémité de la cassette permet de centrer et de caler la cassette entre les deux éléments de solidarisation. Après sa mise en place, la cassette ne peut donc pas se déplacer, ni battre. Ceci permet de limiter les vibrations pouvant occasionner des nuisances sonores et des dégradations du cache-bagages.

Les éléments de solidarisation selon l'invention permettent donc de solidariser de façon simple mais efficace, une cassette de cache-bagages dans le coffre d'un véhicule. Cette technique permet de simplifier la cassette dans la mesure où elle ne présente aucun moyen intégré permettant sa solidarisation.

### 6.6 Variante du mode de solidarisation de la cassette

Dans une variante de l'invention, les parois du coffre peuvent comprendre des éléments permettant d'adapter la position relative des éléments de solidarisation selon l'invention selon au moins un axe de réglage parallèle à un axe formé par la cassette. Ainsi, les parois peuvent présenter un élément déformable contre lequel viennent en appui les éléments de solidarisation de façon que la distance les séparant puisse être réglée.

### 6.7 Procédé de solidarisation d'une cassette

La figure 8 illustre un procédé de solidarisation d'un cache-bagages aux parois d'un coffre d'un véhicule au moyen d'éléments de solidarisation selon l'invention. Le procédé décrit concerne plus particulièrement la première installation d'éléments de solidarisation selon l'invention.

Un tel procédé comprend au moins trois étapes.

Une première étape 80 consiste à mettre en place au moins un élément de solidarisation selon l'invention à au moins une extrémité d'une cassette d'un cache bagage pour former un système cache-bagages. Cette étape permet également le centrage du système cache-bagages entre les parois du coffre.

Une deuxième étape 81 consiste à positionner le système cache-bagages dans des logements respectifs formés dans les parois d'un coffre.

Une troisième étape 82 consiste à fixer les éléments de solidarisation aux parois d'un coffre dans une position permettant de compenser un jeu éventuel sur la distance entre les parois et/ou sur la longueur de la cassette. Cette fixation peut se faire par agrafage, par clippage, par vissage, par collage...

Les éléments de solidarisation tels que décrit permettent la solidarisation de cassette de cache-bagages dans un coffre de véhicule. Ils peuvent également servir à solidariser une cassette de tout autre dispositif d'occultation de surfaces d'un véhicule comme les stores occultants des surfaces vitrées ou les ouvertures, les stores de toit, les stores de hayon, les stores de pare-brise, les coupe-vents, et tous les autres systèmes similaires pouvant mettre en oeuvre des toiles ou écrans amovibles, sans sortir pour cela du champ de la présente invention.

## Revendications

1. Système de cache-bagages pour véhicule automobile, comprenant une cassette amovible (30, 50), à l'intérieur de laquelle est logé au moins un rideau d'occultation mobile entre une position repliée et au moins une position dépliée, et deux éléments de solidarisation (33, 34, 40) comprenant chacun un bâti (41) destiné à être monté sur une paroi du coffre (31, 32, 51) dudit véhicule et comprenant une cavité (414) formant un réceptacle coopérant chacun avec une des extrémités de ladite cassette (30, 50),
**caractérisé en ce qu'**au moins un desdits éléments de solidarisation (33, 34, 40) et/ou au moins une desdites parois (31, 32, 51) comprend des moyens d'adaptation de la position relative de chacun desdits bâtis (41), au moins selon un axe de réglage parallèle à un axe défini par ladite cassette (30, 50) lorsqu'elle est montée dans lesdits éléments de solidarisation (33, 34, 40),
de façon à compenser un jeu éventuel sur la distance entre lesdites parois (31, 32) et/ou sur la longueur de ladite cassette (30, 50).

2. Système selon la revendication 1, caractérisé en ce le ou lesdits éléments de solidarisation (33, 34, 40) présentent une première portion (411) destinée à coopérer avec un logement (511) formé dans une paroi latérale (31, 32, 51) dudit coffre.

3. Système selon la revendication 2, **caractérisé en ce que** ladite première portion (411) présente au moins un premier moyen de guidage coopérant avec au moins un second moyen de guidage complémentaire (512) prévu à cet effet dans ledit logement (511) formé sur la paroi latérale correspondante dudit coffre, pour faciliter un déplacement relatif selon ledit axe de réglage.

4. Système selon l'une quelconque des revendications 1 à 3, **caractérisé en ce qu'**au moins un desdits éléments de solidarisation (33, 34, 40) est fixé à ladite paroi à l'aide d'au moins une agrafe (412).

5. Système selon l'une quelconque des revendications 1 à 4, **caractérisé en ce que** le ou lesdits éléments de solidarisation (33, 34, 40) comprennent au moins une lèvre déformable (415) venant en appui sur ladite paroi latérale.

6. Système selon l'une quelconque des revendications 1 à 5, **caractérisé en ce qu'**au moins un desdits éléments de solidarisation (33, 34, 40) comprend des moyens d'ajustement d'une longueur de pénétration de ladite cassette (30, 50) à l'intérieur d'un réceptacle (414) formé dans ledit ou lesdits éléments de solidarisation (33, 34, 40).

7. Système selon la revendication 6, **caractérisé en ce que** lesdits moyens d'ajustement comprennent une lame (42) formant moyens de rappel et/ou mobile sous l'action de moyens de rappel.

8. Système selon l'une quelconque des revendications 1 à 7, **caractérisé en ce qu'**au moins un desdits éléments de solidarisation (33, 34, 40) comprend un couvercle (432) mobile entre une position de maintien, empêchant le retrait de ladite cassette (30, 50) et une position de libération permettant le retrait de ladite cassette (30, 50).

9. Système selon les revendications 7 et 8, **caractérisé en ce que**, dans ladite position de retrait, ledit couvercle (432) agit sur ladite lame (42) et/ou sur lesdits moyens de rappel de façon à faciliter le retrait de ladite cassette (30, 50).

10. Système selon l'une quelconque des revendications 6 à 8, **caractérisé en ce que** ledit couvercle (432) est guidé en coulissement dans ledit élément de solidarisation (33, 34, 40), selon un axe sensiblement parallèle audit axe de réglage.

11. Élément de solidarisation (33, 34, 40) d'une cassette (30, 50) de cache-bagages pour véhicule automobile, à l'intérieur de laquelle est logé au moins un rideau d'occultation mobile entre une position repliée et au moins une position dépliée, ledit élément de solidarisation (33, 34, 40) comprenant un bâti (41) destiné à être monté sur une paroi (31, 32, 51) du coffre dudit véhicule, ledit bâti (41) comprenant une cavité (414) formant un réceptacle coopérant avec une des extrémités de ladite cassette (30, 50),
**caractérisé en ce qu'**il comprend des moyens d'adaptation de la position relative dudit bâti (41) par rapport à une desdites parois (31, 32, 51), au moins selon un axe de réglage parallèle à un axe défini par ladite cassette (30, 50) lorsqu'elle est montée dans ledit élément de solidarisation (33, 34, 40),
de façon à compenser un jeu éventuel sur la distance entre lesdites parois (31, 32, 51) et/ou sur la longueur de ladite cassette (30, 50).

12. Procédé de montage d'un système cache-bagages dans un véhicule automobile, ledit système comprenant une cassette (30, 50) amovible, à l'intérieur de laquelle est logé au moins un rideau d'occultation mobile entre une position repliée et au moins une position dépliée, et deux éléments de solidarisation (33, 34, 40) comprenant chacun un bâti (41) destiné à être monté sur une paroi (31, 32, 51) du coffre dudit véhicule et comprenant une cavité (414) formant un réceptacle coopérant avec une des extrémités de ladite cassette (30, 50), au moins un desdits éléments de solidarisation (33, 34, 40) et/ou au moins une desdites parois (31, 32, 51) comprenant des moyens d'adaptation de la position relative de chacun desdits bâtis (41), au moins selon un axe de réglage parallèle à un axe défini par ladite cassette (30, 50) lorsqu'elle est montée dans lesdits éléments de solidarisation (33, 34,40),
**caractérisé en ce qu'**il comprend :
- une étape de mise en place d'au moins un élément de solidarisation (33, 34, 40) à au moins une extrémité de ladite cassette (30, 50) pour former un système cache-bagages ;
- une étape de positionnement dudit système cache-bagages dans des logements (511) respectifs formés dans lesdites parois latérales (31, 32, 51) dudit coffre ;
- une étape de fixation desdits bâtis (41) auxdites parois latérales (31, 32, 51) dudit coffre, dans une position permettant de compenser un jeu éventuel sur la distance entre lesdites parois (31, 32, 51) et/ou sur la longueur de ladite cassette (30, 50).

13. Véhicule automobile **caractérisé en ce qu'**il est équipé d'un système de cache-bagages selon l'une quelconque des revendications 1 à 10 et/ou d'au moins un élément de solidarisation (33, 34, 40) selon la revendication 11.

## Claims

1. Baggage-concealing system for a motor vehicle, comprising a detachable cassette (30, 50), inside which is housed at least one masking screen which can be moved between a rolled-up position and at least one opened-out position, and two attachment elements (33, 34, 40) each comprising a frame (41) intended to be mounted on a wall of the trunk (31, 32, 51) of the said vehicle and comprising a cavity (414) forming a receptacle, each cooperating with one of the ends of the said cassette (30, 50),
**characterised in that** at least one of the said attachment elements (33, 34, 40) and/or at least one of the said walls (31, 32, 51) comprises means for adapting the relative position of each of the said frames (41), at least along an axis of adjustment which is parallel to an axis defined by the said cassette (30, 50) when the latter is mounted in the said attachment elements (33, 34, 40),
so as to compensate for any clearance over the distance between the said walls (31, 32) and/or over the length of the said cassette (30, 50).

2. System according to claim 1, **characterised in that** the said attachment element or elements (33, 34, 40) has/have a first portion (411) which is intended to cooperate with a housing (511) formed in a side wall (31, 32, 51) of the said trunk.

3. System according to claim 2, **characterised in that** the said first portion (411) has at least one first guide means cooperating with at least one second complementary guide means (512) provided for that purpose in the said housing (511) which is formed on the corresponding side wall of the said trunk, in order to facilitate relative displacement along the said axis of adjustment.

4. System according to any of claims 1 to 3, **characterised in that** at least one of the said attachment elements (33, 34, 40) is fixed to the said wall with the aid of at least one staple (412).

5. System according to any of claims 1 to 4, **characterised in that** the said attachment element or elements (33, 34, 40) comprises/comprise at least one deformable lip (415) which rests on the said side wall.

6. System according to any of claims 1 to 5, **characterised in that** at least one of the said attachment elements (33, 34, 40) comprises means for adjusting a length of penetration of the said cassette (30, 50) inside a receptacle (414) formed in the said attachment element or elements (33, 34, 40).

7. System according to claim 6, **characterised in that** the said adjusting means comprise a leaf (42) which forms return means and/or can be moved under the action of return means.

8. System according to any of claims 1 to 7, **characterised in that** at least one of the said attachment elements (33, 34, 40) comprises a cover (432) which can be moved between a holding position, which prevents the withdrawal of the said cassette (30, 50), and a releasing position which permits the withdrawal of the said cassette (30, 50).

9. System according to claims 7 and 8, **characterised in that**, in the said withdrawal position, the said cover (432) acts on the said leaf (42) and/or on the said return means so as to facilitate the withdrawal of the said cassette (30, 50).

10. System according to any of claims 6 to 8, **characterised in that** the said cover (432) is guided in sliding motion within the said attachment element (33, 34, 40) along an axis which is substantially parallel to the said axis of adjustment.

11. Attachment element (33, 34, 40) for a cassette (30, 50) of a baggage-concealing device for a motor vehicle, inside which cassette there is housed at least one masking screen which can be moved between a rolled-up position and at least one opened-out position, the said attachment element (33, 34, 40) comprising a frame(41) intended to be mounted on a wall (31, 32, 51) of the trunk of the said vehicle, the said frame (41) comprising a cavity (414) forming a receptacle cooperating with one of the ends of the said cassette (30, 50),
**characterised in that** said attachment element comprises means for adapting the relative position of the said frame (41) in relation to one of the said walls (31, 32, 51), at least along an axis of adjustment which is parallel to an axis defined by the said cassette (30, 50) when the latter is mounted in the said attachment element (33, 34, 40),
so as to compensate for any clearance over the distance between the said walls (31, 32, 51) and/or over the length of the said cassette (30, 50).

12. Method of mounting a baggage-concealing system in a motor vehicle, the said system comprising a detachable cassette (30, 50), inside which is housed at least one masking screen which can be moved between a rolled-up position and at least one opened-out position, and two attachment elements (33, 34, 40) each comprising a frame (41) intended to be mounted on a wall (31, 32, 51) of the trunk of the said vehicle and comprising a cavity (414) forming a receptacle cooperating with one of the ends of the said cassette (30, 50), at least one of the said attachment elements (33, 34, 40) and/or at least one of the said walls (31, 32, 51) comprising means for adapting the relative position of each of the said frames (41), at least along an axis of adjustment which is parallel to an axis defined by the said cassette (30, 50) when the latter is mounted in the said attachment elements (33, 34, 40), **characterised in that** said method comprises:
- a stage involving the placing in position of at least one attachment element (33, 34, 40) at at least one end of the said cassette (30, 50) in order to form a baggage-concealing system;
- a stage involving the positioning of the said baggage-concealing system in respective housings (511) formed in the said side walls (31, 32, 51) of the said trunk;
- a stage involving the fixing of the said frames (41) to the said side walls (31, 32, 51) of the said trunk, in a position which makes it possible to compensate for any clearance over the distance between the said walls (31, 32, 51) and/or over the length of the said cassette (30, 50).

13. Motor vehicle, **characterised in that** it is equipped with a baggage-concealing system according to any of claims 1 to 10 and/or with at least one attachment element (33, 34, 40) according to claim 11.

## Patentansprüche

1. Gepäckabdeckungssystem für Kraftfahrzeug, das eine herausnehmbare Kassette (30, 50) aufweist, in deren Innerem mindestens ein Verdunkelungsvorhang untergebracht ist, der zwischen einer zurückgefalteten Position und mindestens einer aufgefalteten Position beweglich ist, und zwei Befestigungselemente (33, 34, 40), die jeweils einen Rahmen (41) aufweisen, der dazu bestimmt ist, auf eine Wand des Kofferraums (31, 32, 51) des Fahrzeugs montiert zu werden und der einen Hohlraum (414) aufweist, der eine Aufnahme bildet, die mit jedem der Enden der Kassette (30, 50) zusammenwirkt,
**dadurch gekennzeichnet, dass** mindestens eines der Befestigungselemente (33, 34, 40) und/oder mindestens eine der Wände (31, 32, 51) Mittel zum Anpassen der relativen Position jedes der Rahmen (41) mindestens entlang einer Einstellachse, die zu einer Achse, die von der Kassette (30, 50) definiert wird, wenn sie in die Befestigungselemente (33, 34, 40) montiert ist, parallel ist, aufweist,
um ein eventuelles Spiel auf der Entfernung zwischen den Wänden (31, 32) und/oder auf der Länge der Kassette (30, 50) auszugleichen.

2. System nach Anspruch 1, **dadurch gekennzeichnet, dass** das oder die Befestigungselemente (33, 34, 40) einen ersten Abschnitt (411) aufweisen, der dazu bestimmt ist, mit einer Aufnahme (511), die in einer Seitenwand (31, 32, 51) des Kofferraums ausgebildet ist, zusammenzuwirken.

3. System nach Anspruch 2, **dadurch gekennzeichnet, dass** der erste Abschnitt (411) mindestens ein erstes Führungsmittel aufweist, das mit mindestens einem zweiten komplementären Führungsmittel (512) zusammenwirkt, das dazu in der Aufnahme (511), die auf der entsprechenden Seitenwand des Kofferraums ausgebildet ist, vorgesehen ist, um ein relatives Verlagern entlang der Einstellachse zu erleichtern.

4. System nach einem der Ansprüche 1 bis 3, **dadurch gekennzeichnet, dass** mindestens eines der Befestigungselemente (33, 34, 40) an der Wand mit Hilfe mindestens einer Klammer (412) befestigt ist.

5. System nach einem der Ansprüche 1 bis 4, **dadurch gekennzeichnet, dass** das oder die Befestigungselemente (33, 34, 40) mindestens eine verformbare Lippe (415) aufweisen, die auf der Seitenwand zum Aufliegen kommt.

6. System nach einem der Ansprüche 1 bis 5, **dadurch gekennzeichnet, dass** mindestens eines der Befestigungselemente (33, 34, 40) Mittel zum Einstellen einer Eindringlänge der Kassette (30, 50) in das Innere einer Aufnahme (414), die in dem Befestigungselement oder den Befestigungselementen (33, 34, 40) ausgebildet sind, aufweist.

7. System nach Anspruch 6, **dadurch gekennzeichnet, dass** die Mittel zur Einstellen eine Klinge (42) aufweisen, die Rückstellungmittel aufweist und/oder die unter der Einwirkung von Rückstellungmitteln beweglich ist.

8. System nach einem der Ansprüche 1 bis 7, **dadurch gekennzeichnet, dass** mindestens eines der Befestigungselemente (33, 34, 40) einen Deckel (432) aufweist, der zwischen einer Halteposition, die das Herausnehmen der Kassette (30, 50) verhindert, und einer Freigabeposition, die das Herausnehmen der Kassette (30, 50) erlaubt, beweglich ist.

9. System nach einem der Ansprüche 7 und 8, **dadurch gekennzeichnet, dass** der Deckel (432) in der Freigabeposition auf die Klinge (42) und/oder auf die Rückstellungmittel derart einwirkt, dass das Herausnehmen der Kassette (30, 50) erleichtert wird.

10. System nach einem der Ansprüche 6 bis 8, **dadurch gekennzeichnet, dass** der Deckel (432) gleitend in dem Befestigungselement (33, 34, 40) entlang einer Achse, die im Wesentlichen zu der Einstellachse parallel ist, geführt ist.

11. Befestigungselemente (33, 34, 40) einer Kassette (30, 50) zum Abdecken von Gepäck für Kraftfahrzeuge, in deren Innerem mindestens ein Verdunkelungsvorhang untergebracht ist, der zwischen einer zurückgefalteten Position und mindestens einer aufgefalteten Position beweglich ist, wobei das Befestigungselement (33, 34, 40) einen Rahmen (41) aufweist, der dazu bestimmt ist, auf eine Wand (31, 32, 51) des Kofferraums des Fahrzeugs montiert zu werden, wobei der Rahmen (41) einen Hohlraum (414) aufweist, der eine Aufnahme bildet, die mit einem der Enden der Kassette (30, 50) zusammenwirkt,
**dadurch gekennzeichnet, dass** es Mittel zum Anpassen der relativen Position des Rahmens (41) in Bezug zu einer der Wände (31, 32, 51) mindestens nach einer Einstellachse aufweist, die zu einer Achse, die von der Kassette (30, 50) definiert wird, wenn sie in das Befestigungselement (33, 34, 40) montiert ist, parallel ist, um ein eventuelles Spiel auf der Entfernung zwischen den Wänden (31, 32, 51) und/oder auf der Länge der Kassette (30, 50) ausgeglichen wird.

12. Verfahren zur Montage eines Gepäckabdeckungssystems in ein Kraftfahrzeug, wobei das System eine herausnehmbare Kassette (30, 50) aufweist, in deren Innerem mindestens ein Verdunkelungsvorhang untergebracht ist, der zwischen einer zurückgefalteten und mindestens einer aufgefalteten Position beweglich ist, und zwei Befestigungselemente (33, 34, 40), die jeweils einen Rahmen (41) aufweisen, der dazu bestimmt ist, auf eine Wand (31, 32, 51) des Kofferraums des Fahrzeugs montiert zu werden und einen Hohlraum (414) aufweist, der eine Aufnahme bildet, die mit einem der Enden der Kassette (30, 50) zusammenwirkt, wobei mindestens eines der Befestigungselemente (33, 34, 40) und/oder mindestens eine der Wände (31, 32, 51) Mittel zum Anpassen der relativen Position jedes der Rahmen (41) mindestens entlang einer Einstellachse aufweist, die zu einer Achse, die von der Kassette (30, 50) definiert wird, wenn sie in die Befestigungselemente (33, 34, 40) montiert ist, parallel ist,
**dadurch gekennzeichnet, dass** es Folgendes aufweist:
- einen Schritt des Anbringens mindestens eines Befestigungselements (33, 34, 40) an mindestens einem Ende der Kassette (30, 50), um ein Gepäckabdeckungssystem zu bilden;
- einen Schritt des Positionierens des Gepäckabdeckungssystems in jeweiligen Aufnahmen (511), die in den Seitenwänden (31, 32, 51) des Kofferraums ausgebildet sind,
- einen Schritt des Befestigens der Rahmen (41) an den Seitenwänden (31, 32, 51) des Kofferraums in einer Position, die das Ausgleichen eines eventuellen Spiels auf der Entfernung zwischen den Wänden (31, 32, 51) und/oder auf der Länge der Kassette (30, 50) erlaubt.

13. Kraftfahrzeug, **dadurch gekennzeichnet, dass** es mit einem Gepäckabdeckungssystem nach einem der Ansprüche 1 bis 10 und/oder mindestens einem Befestigungselement (33, 34, 40) nach Anspruch 11 ausgestattet ist.
